# FASCICULE DE BREVET EUROPEEN

(11) **EP 1 337 411 B1**
(45) Date de publication et mention de la délivrance du brevet: **20.09.2006**
(21) Numéro de dépôt: 01997406.2
(22) Date de dépôt: 21.11.2001
(51) Int. Cl.: B60J 5/04

(54) **DISPOSITIF POUR AMELIORER LA RIGIDITE DE LA STRUCTURE D'UN VEHICULE, NOTAMMENT D'UN VEHICULE A TOIT RETRACTABLE**
VORRICHTUNG ZUM VERBESSERN DER STEIFIGKEIT EINER FAHRZEUGSTRUKTUR, INSBESONDEREEINES FAHRZEUGES MIT ZURÜCKSCHIEBBAREM DACH
DEVICE FOR IMPROVING A VEHICLE STRUCTURAL RIGIDITY, IN PARTICULAR A VEHICLE WITH RETRACTABLE ROOF

(30) Priorité: 22.11.2000 FR 0015079
(43) Date de publication de la demande: 27.08.2003
(73) Titulaire: Société Européenne de Brevets Automobiles - SEBA, 75011 Paris (FR)
(72) Inventeur: QUEVEAU, Gérard, F-79140 Le Pin (FR); SORIN, Albéric, F-79140 Le Pin (FR)
(74) Mandataire: Geismar, Thierry
(86) Numéro de dépôt international: PCT/FR2001/003668
(87) Numéro de publication internationale: WO 2002/042104

(56) Documents cités:
- DE-C- 4 007 348
- US-A- 2 822 203

## Description

La présente invention concerne un dispositif pour renforcer un véhicule, notamment équipé d'un toit rétractable.

Du document DE-C-40 07 348 on connait un dispositif pour améliorer la rigidité de la structure d'un véhicule, notamment d'un véhicule à toit rétractable.

On sait que les véhicules du type cabriolet ou les véhicules à toit rétractable, lorsque les éléments du toit sont rangés dans le coffre du véhicule, présentent une rigidité à la flexion et à la torsion, ainsi qu'une résistance aux chocs latéraux réduite par rapport à celles d'un véhicule à toit rigide non rétractable.

En effet, le toit rigide, ainsi que les montants latéraux participent significativement à la rigidité de la carrosserie.

Le problème ci-dessus se pose surtout dans le cas de véhicules à quatre portes équipés d'un toit rétractable.

En effet, dans ces véhicules les longerons inférieurs du châssis présentent une longueur plus importante que dans les véhicules à deux portes et de ce fait, ces longerons n'assurent plus une tenue suffisante en torsion et en flexion.

Par ailleurs, dans ce type de véhicule, la seule liaison existant entre le bord arrière de chaque porte et la carrosserie est celle existant au niveau de la serrure unique.

Bien entendu, cette serrure unique ne procure aucune résistance aux efforts de torsion.

Le but de la présente invention est de remédier aux inconvénients ci-dessus.

Suivant l'invention, le dispositif de renforcement d'un véhicule, notamment équipé d'un toit rétractable est caractérisé en ce qu'il comporte entre le bord arrière de la porte du véhicule et le bord adjacent de la carrosserie dudit véhicule, au moins un premier élément comprenant un électro-aimant solidaire de l'un des desdits bords et en regard dudit électro-aimant au moins un second élément comprenant un matériau magnétique solidaire de l'autre bord, l'un desdits premier et second éléments étant mobile vers l'autre élément lorsque l'électro-aimant est alimenté par un courant électrique, les extrémités en regard desdits éléments étant conformées pour pouvoir s'emboîter axialement l'une dans l'autre.

De préférence, le dispositif comprend au moins deux premiers éléments comprenant chacun un électro-aimant et au moins deux seconds éléments, disposés sur lesdits bords en regard, de part et d'autre de la serrure qui équipe normalement ledit bord de la porte.

Cette disposition d'éléments de verrouillage magnétique de part et d'autre de la serrure centrale permet de créer une liaison rigide entre la porte et la carrosserie qui améliore la résistance de la structure aux efforts de torsion.

D'autres particularités et avantages de l'invention apparaîtront encore dans la description ci-après.

Aux dessins annexés, donnés à titre d'exemples non limitatifs :
- la figure 1 est une vue en perspective partielle d'une porte de véhicule équipée d'une partie du dispositif selon l'invention ;
- la figure 2 est une vue analogue à la figure 1, montrant en outre la partie de la carrosserie qui comporte l'autre partie du dispositif selon l'invention, ce dispositif étant déverrouillé ;
- la figure 3 est une vue analogue à la figure 2, le dispositif étant verrouillé ;
- la figure 4 est une vue en coupe longitudinale partielle d'un dispositif selon l'invention en position déverrouillée, équipant la partie supérieure de la porte ;
- la figure 5 est une vue analogue à la figure 4 montrant le dispositif en position verrouillée ;
- la figure 6 est une vue analogue à la figure 4, montrant le dispositif de verrouillage équipant la partie inférieure de la porte, en position déverrouillée ;
- la figure 7 est une vue analogue à la figure 6, montrant le dispositif en position verrouillée ;
- la figure 8 est une vue en coupe partielle d'un dispositif équipé d'un moyen de verrouillage complémentaire, en position déverrouillée ;
- la figure 9 est une vue analogue à la figure 8, le dispositif étant en position verrouillée.

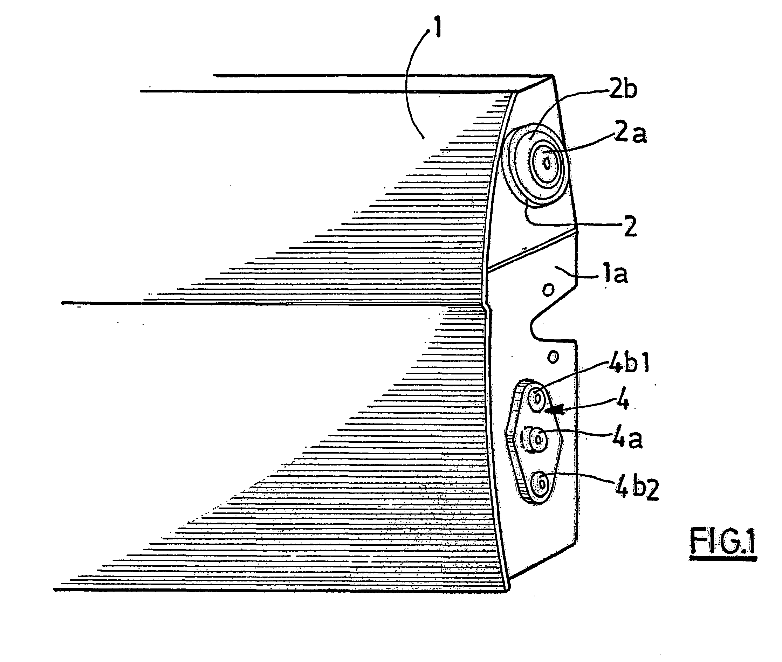

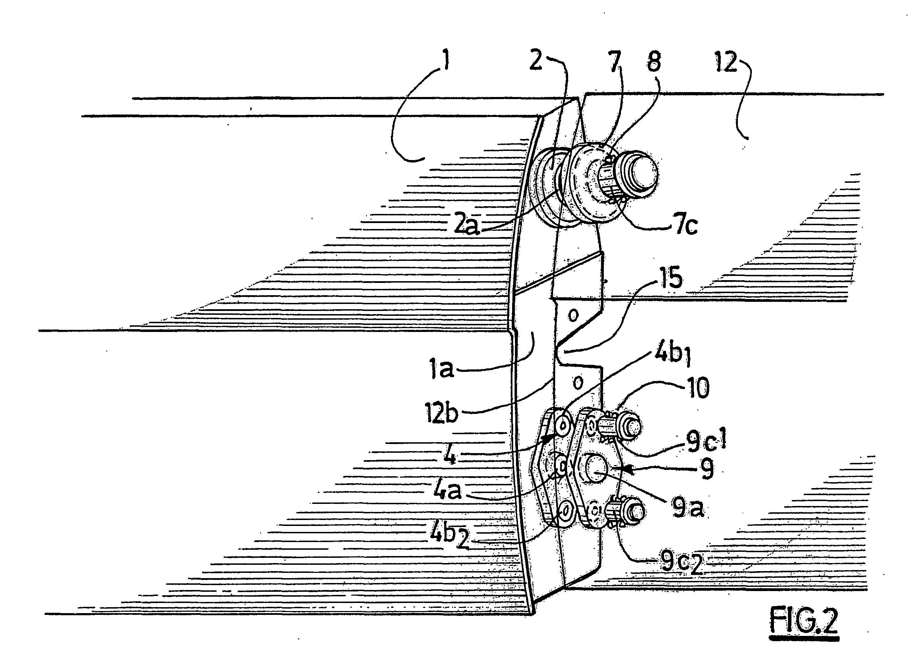

Dans la réalisation représentée sur les figures 1 à 7, le dispositif pour améliorer la rigidité de la structure d'un véhicule comporte entre le bord 1a de la porte 1 du véhicule et le bord adjacent 12b de la carrosserie 12 du véhicule au moins un premier élément 2 comprenant un électro-aimant 2a solidaire de l'un 1a desdits bords et en regard dudit premier élément 2 au moins un second élément 7 solidaire de l'autre bord 12b et comportant en regard de l'électro-aimant 2a, un matériau magnétique 7a.

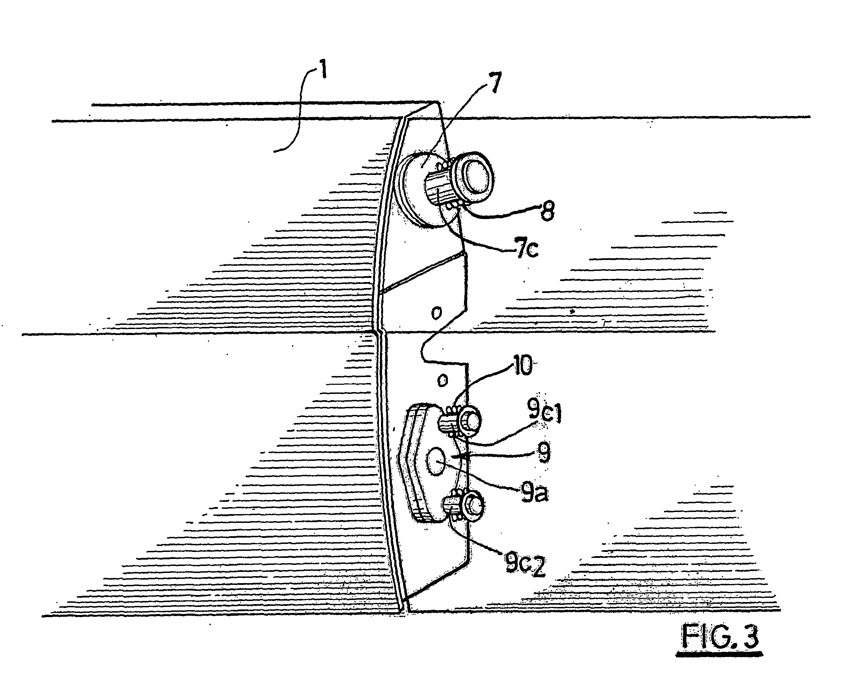

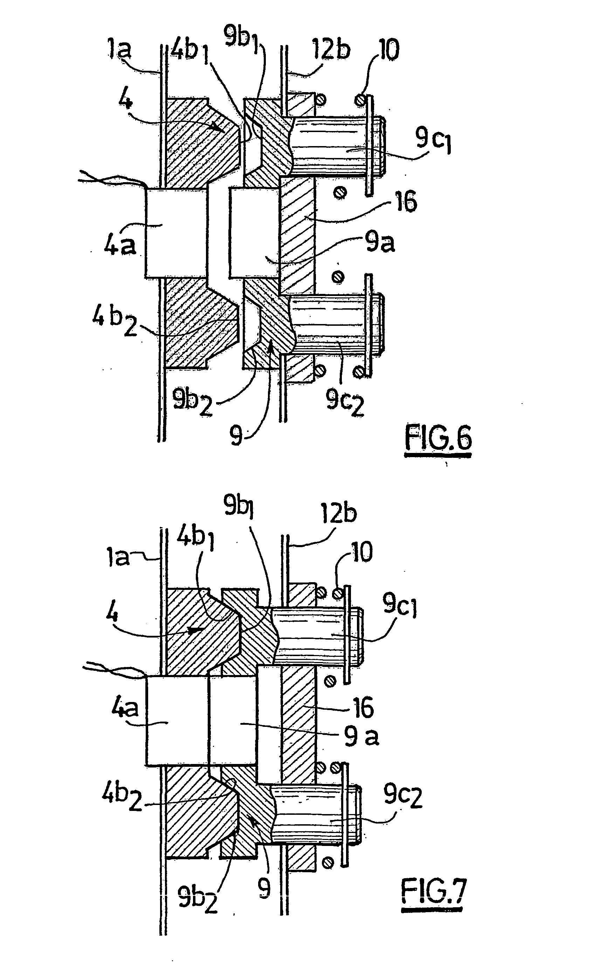

L'un 7 desdits premier et second éléments est mobile vers l'autre élément 2 lorsque l'électro-aimant 2a est alimenté par un courant électrique (voir figures 3 et 5).

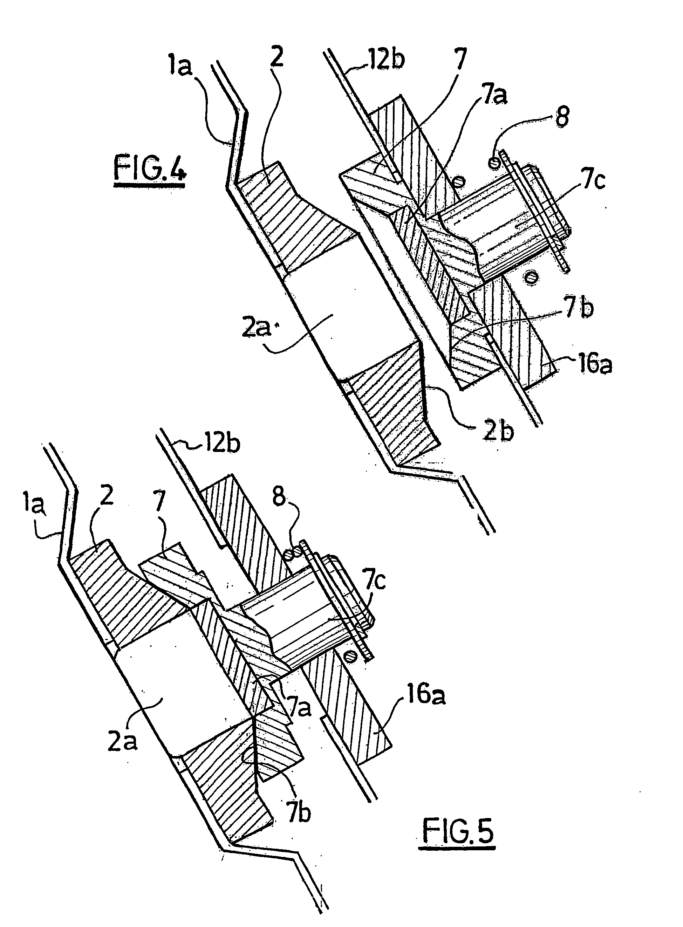

Comme montré par les figures 4 et 5, les extrémités 2b, 7b en regard desdits éléments 2, 7 sont conformées pour pouvoir s'emboîter axialement l'une dans l'autre.

Dans l'exemple représenté, le dispositif comprend au moins deux premiers éléments 2, 4 comportant chacun un électro-aimant 2a, 4a et au moins deux seconds éléments 7, 9 disposés sur lesdits bords en regard 1 a, 12b de part et d'autre de la serrure 15 qui équipe normalement le bord 1a de la porte.

Par ailleurs, dans l'exemple représenté, les premiers éléments 2,4 sont solidaires de façon fixe du bord 1a de la porte 1 et les seconds éléments 7, 9 sont solidaires de façon coulissante du bord 12b de la carrosserie.

De plus, l'extrémité des premiers éléments 2, 4 présente une protubérance 2b, 4b1, 4b2 en forme de tronc de cône et l'extrémité des seconds éléments 7, 9 présente une cavité de forme complémentaire 7b, 9b1, 9b2.

On voit également notamment sur les figures 4, 5 et 6, 7 que les seconds éléments 7, 9 comportent chacun une partie 7c, 9c1, 9c2 montée coulissante dans le bord 12b de la carrosserie contre l'action d'un ressort de rappel 8, 10.

Par ailleurs, ces seconds éléments 7,9 sont montés coulissants dans une plaque de renforcement 16a, 16 fixée au bord 12 b de la carrosserie.

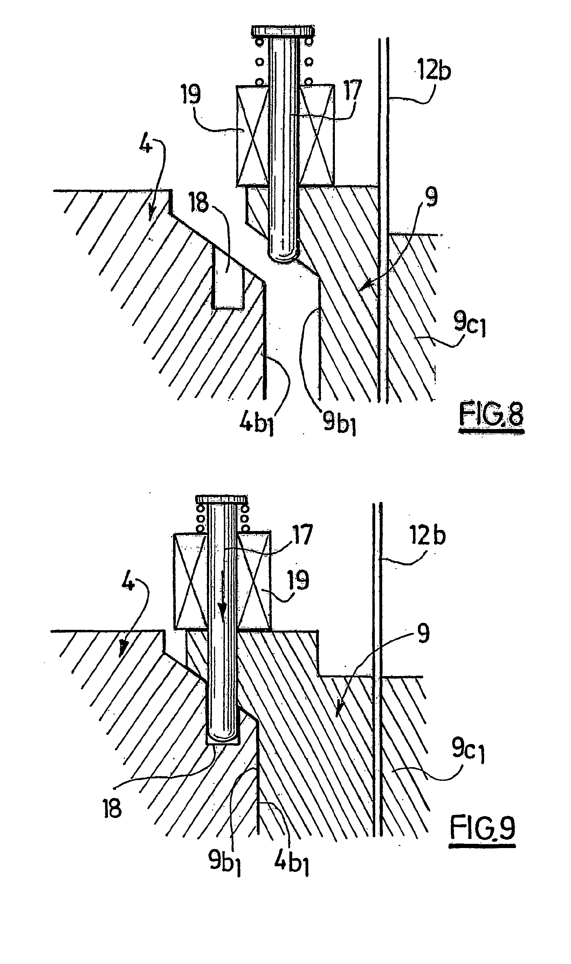

Dans l'exemple représenté, le dispositif situé à la partie inférieure, comporte en fait deux protubérances 4b1, 4b2 qui coopèrent avec deux cavités complémentaires 9b1, 9b2.
Dans l'exemple des figures 8, 9, les éléments 4, 9 coopèrent avec des moyens permettant de les verrouiller axialement, lorsque les extrémités de ces éléments 4, 9 sont emboîtées l'une dans l'autre.

Ces moyens de verrouillage comprennent un doigt 17 solidaire de l'extrémité de l'élément mobile 9 pouvant s'engager dans une ouverture 18 pratiquée dans l'extrémité de l'élément fixe 4, lorsque les extrémités de ces éléments 4, 9 sont emboîtées l'une dans l'autre, comme montré par la figure 9.

Dans l'exemple représenté sur les figures 8 et 9, le doigt 17 est mobile vers la position verrouillée sous l'action d'un électro-aimant 19. Un ressort de rappel 20 permet de déplacer le doigt 17 vers la position déverrouillée lorsque l'alimentation électrique de l'électro-aimant est interrompue.

Bien entendu d'autres systèmes de verrouillage que celui représenté peuvent être utilisés.

Ainsi, le système de verrouillage décrit dans la demande de brevet français No. 0013242 au nom de la demanderesse pourrait être utilisé.

On va maintenant expliquer le fonctionnement du dispositif que l'on vient de décrire.

Après fermeture de la porte, on commande l'alimentation électrique des électro-aimants 2a, 4a. Le champ électromagnétique créé par les électro-aimants attire les pastilles magnétiques 7a, 9a des éléments mobiles 7, 9. Les extrémités 7b, 9b1, 9b2 de ces éléments mobiles 7, 9 s'emboîtent sur les protubérances 2b, 4b1, 4b2 des éléments fixes 2, 4 comme montré par les figures 5 et 7.

Grâce au verrouillage ainsi obtenu, réparti de part et d'autre de la serrure centrale, la porte 1 est rigidement liée à la carrosserie, ce qui améliore la rigidité de la structure.

Cette rigidité est encore améliorée grâce au verrouillage complémentaire représenté sur les figures 8 et 9 qui permet à la structure de mieux résister aux efforts de flexion et de torsion, ainsi qu'aux chocs latéraux.

Pour ouvrir la porte 1, il suffit de couper l'alimentation électrique des électro-aimants 2a, 4a. Les ressorts de rappel 8, 10 ramènent les éléments mobiles 7, 9 en position déverrouillée.

En cas de choc, un dispositif peut être prévu pour couper automatiquement l'alimentation électrique des électro-aimants 2a, 4a afin de pouvoir ouvrir la porte.

## Revendications

1. Dispositif pour améliorer la rigidité de la structure d'un véhicule, notamment d'un véhicule à toit rétractable, **caractérisé en ce qu'**il comporte entre le bord arrière (1a) de la porte (1) du véhicule et le bord adjacent (12b) de la carrosserie (12) dudit véhicule, au moins pour un premier élément (2) comprenant un électro-aimant (2a) solidaire de l'un (1a;12b) desdits bords et en regard dudit électro-aimant (2a) au moins un second élément (7) comprenant un matériau magnétique (7a) solidaire de l'autre bord (12b; 1a), l'un desdits premier (2) et second (7) éléments étant mobile vers l'autre élément lorsque l'électro-aimant (2a) est alimenté par un courant électrique, les extrémités (2b, 7b) en regard desdits éléments (2, 7) étant conformées pour pouvoir s'emboîter axialement l'une dans l'autre.

2. Dispositif conforme à la revendication 1, **caractérisé en ce qu'**il comprend au moins deux premiers éléments (2, 4) comprenant chacun un électro-aimant (2a, 4a) et au moins deux seconds éléments (7, 9), disposés sur lesdits bords en regard (1a, 12b) de part et d'autre de la serrure (15) qui équipe normalement ledit bord (1a) de la porte (1).

3. Dispositif conforme à l'une des revendications 1 ou 2, **caractérisé en ce que** le ou les premiers éléments (2, 4) sont solidaires de façon fixe du bord (1a) de la porte (1) et le ou les seconds éléments (7, 9) sont solidaires de façon coulissante du bord (12b) de la carrosserie (12).

4. Dispositif conforme à l'une des revendications 1 à 3, **caractérisé en ce que** l'extrémité du ou des premiers éléments (2, 4) présente une protubérance en forme de tronc de cône (2b, 4b) et l'extrémité du ou des seconds éléments (7, 9) présente une cavité de forme complémentaire (7b, 9b).

5. Dispositif conforme à l'une des revendications 3 ou 4 quand la revendication 4 est basée sur la revendication 3, **caractérisé** 3, en ce que le ou lesdits seconds éléments (7, 9) sont montés coulissants dans le bord (12b) de la carrosserie (12) contre l'action d'un ressort de rappel (8, 10).

6. Dispositif conforme à l'une des revendications 3, 5 ou 4 quand cette dernière est basée sur la revendication 3, **caractérisé en ce que** le ou lesdits seconds éléments (7, 9) sont montés coulissants dans une plaque de renforcement (16, 16a) fixée audit bord (12b) de la carrosserie (12).

7. Dispositif conforme à l'une des revendications 1 à 6, **caractérisé en ce que** lesdits premier et second éléments (2, 4 ; 7, 9) coopèrent avec des moyens (17) permettant de les verrouiller axialement l'un à l'autre lorsque les extrémités (2b, 4b, 7b, 9b) desdits éléments (2, 4; 7, 9) sont emboîtées l'une dans l'autre.

8. Dispositif conforme à la revendication 7, **caractérisé en ce que** lesdits moyens comprennent un doigt (17) solidaire de l'un (9) des éléments pouvant s'engager dans une ouverture (18) pratiquée dans l'autre élément (4), lorsque les extrémités (4b, 9b) desdits éléments (4, 9) sont emboîtées l'une dans l'autre.

9. Dispositif conforme à la revendication 8, **caractérisé en ce que** ledit doigt (17) est mobile sous l'action d'un électro-aimant (19).

## Claims

1. Device for improving the rigidity of the structure of a vehicle, in particular a vehicle with a retractable roof, **characterised in that** it includes between the rear edge (1a) of the door (1) of the vehicle and the edge (12b) adjacent to the body (12) of said vehicle, at least one first element (2) comprising an electromagnet (2a) solidly attached to one (1a; 12b) of said edges and facing said electromagnet (2a), at least one second element (7) comprising a magnetic material (7a) solidly attached to the other edge (12b; 1a), one of said first (2) and second (7) elements being mobile in the direction of the other element when the electromagnet (2a) is supplied with an electric current, the ends (2b, 7b) facing said elements (2,7) being shaped to slot into each other axially.

2. Device according to claim 1, **characterised in that** it comprises at least two first elements (2, 4) each comprising an electromagnet (2a, 4a) and at least two second elements (7, 9), arranged on said facing edges (1a, 12b) on either side of the lock (15) with which said edge (1a) of the door (1) is normally equipped.

3. Device according to either one of claims 1 or 2, **characterised in that** the first element or elements (2, 4) are solidly attached in a fixed fashion to the edge (1a) of the door (1) and the second element or elements (7, 9) are solidly attached in a sliding fashion to the edge (12b) of the body (12).

4. Device according to any one of the claims from 1 to 3, **characterised in that** the end of the first element or elements (2, 4) has a protuberance in the shape of a frustum (2b, 4b) and the end of the second element or elements (7,9) has a cavity with a complementary shape (7b, 9b).

5. Device according to either one of claims 3 or 4 when claim 4 is based on claim 3, **characterised in that** said second element or elements (7, 9) are mounted in a sliding fashion in the edge (12b) of the body (12) against the action of a return spring (8, 10).

6. Device according to claims 3, 5 or 4 when the latter is based on claim 3, **characterised in that** said second element or elements (7, 9) are mounted in a sliding fashion in a reinforcement plate (16, 16a) fixed to said edge (12b) of the body (12).

7. Device according to any one of the claims from 1 to 6, **characterised in that** said first and second elements (2, 4; 7, 9) cooperate with means (17) that allow them to lock together axially when the ends (2b, 4b, 7b, 9b) of said elements (2, 4; 7, 9) are slotted into each other.

8. Device according to claim 7, **characterised in that** said means comprise a finger (17) solidly attached to one (9) of the elements, which can be inserted in an opening (18) made in the other element (4) when the ends (4b, 9b) of said elements (4, 9) are slotted into each other.

9. Device according to claim 8, **characterised in that** said finger (17) is mobile under the action of an electromagnet (19).

## Patentansprüche

1. Vorrichtung zur Verbesserung der Steifheit der Struktur eines Fahrzeugs, insbesondere eines Fahrzeugs mit Schiebedach, **dadurch gekennzeichnet, dass** sie zwischen dem hinteren Rand (1a) der Fahrzeugtür (1) und dem angrenzenden Rand (12b) der Karosserie (12) besagten Fahrzeugs, mindestens ein erstes Element(2) umfasst, das einen Elektromagneten (2a) umfasst, der fest mit einem der besagten Ränder (1a, 12b) verbunden ist und gegenüber besagtem Elektromagnet (2a) mindestens ein zweites Element (7), das magnetisches Material (7a) umfasst, das mit dem anderen Rand (12b, 1a) verbunden ist, wobei das besagte erste Element (2) und das besagte zweite Element (7) beweglich zum anderen Element verschoben werden kann, wenn der Elektromagnet (2a) durch einen elektrischen Strom gespeist wird, wobei die Enden (2b, 7b) gegenüber besagten Elementen (21, 7) aufeinander abgestimmt sind, um axial ineinander geschoben werden zu können.

2. Vorrichtung gemäß Patentanspruch 1, **dadurch gekennzeichnet, dass** sie mindestens zwei erste Elemente (2, 4) umfasst, die jeweils einen Elektromagneten (2a, 4a) umfassen und mindestens zwei zweite Elemente (7, 9), die auf besagten Rändern zu beiden Seiten des Schlosses (15), mit dem besagter Rand (1a) der Tür (1) normalerweise versehen ist, einander gegenüberstehen.

3. Vorrichtung gemäß einem der Patentansprüche 1 oder 2, **dadurch gekennzeichnet, dass** der oder die ersten Elemente (2, 4) fest mit dem Rand (1a) der Tür (1) und das oder die zweiten Elemente (7, 9) gleitend mit dem Rand (12b) der Karosserie (12) verbunden sind.

4. Vorrichtung gemäß einem der Patentansprüche 1 bis 3, **dadurch gekennzeichnet, dass** das Ende des oder der ersten Elemente (2, 4) eine Verkleidung in Form eines Kegelstumpfes (2b, 4b) und das Ende des oder der zweiten Elemente (7, 9) eine Aushöhlung (7, 9) in komplementärer Form aufweist.

5. Vorrichtung gemäß einem der Patentansprüche 3 oder 4, wenn Anspruch 4 auf Anspruch 3 beruht, **dadurch gekennzeichnet, dass** das oder die zweiten Elemente (7, 9) gleitend am Rand (12b) der Karosserie (12) entgegen der Wirkung einer Rückstellfeder (8, 10) montiert sind.

6. Vorrichtung gemäß einem der Patentansprüche 3, 5 oder 4, wenn letzterer auf Anspruch 3 beruht, **dadurch gekennzeichnet, dass** der oder die zweiten Elemente (7, 9) gleitend in eine Verstärkungsplatte (16, 16a) montiert sind, die an Rand (12b) von Karosserie (12) befestigt ist.

7. Vorrichtung gemäß einem der Ansprüche 1 bis 6, **dadurch gekennzeichnet, dass** das besagte erste und zweite Element (2, 4, 7, 9) mit Mitteln (A) zusammenwirkt, die das axiale Verriegeln miteinander ermöglichen, wenn die Enden (2b, 4b, 7b, 9b) besagter Elemente (2, 4, 7, 9) ineinander geschoben sind.

8. Vorrichtung gemäß Anspruch 7, **dadurch gekennzeichnet, dass** besagte Mittel einen Stift (17) umfassen, der mit einem der Elemente (9) verbunden ist, die in eine Öffnung (18) eingeführt werden können, welche in das andere Element (4) eingearbeitet wurde, wenn die Enden (4b, 9b) besagter Elemente (4, 9) ineinander geschoben sind.

9. Vorrichtung gemäß einem der Ansprüche 8, **dadurch gekennzeichnet, dass** besagter Stift (17) unter der Einwirkung eines Elektromagneten (19) beweglich ist.
